# EUROPÄISCHE PATENTSCHRIFT

(11) **EP 2 634 049 B1**
(45) Veröffentlichungstag und Bekanntmachung des Hinweises auf die Patenterteilung: **29.07.2015**
(21) Anmeldenummer: 12007870.4
(22) Anmeldetag: 22.11.2012
(51) Int. Cl.: B60R 22/20

(54) **Gurthöhenverstellvorrichtung**
Safety belt height adjustment device
Dispositif de réglage de la hauteur de ceinture de securité

(30) Priorität: 02.03.2012 DE 202012002241 U
(43) Veröffentlichungstag der Anmeldung: 04.09.2013
(73) Patentinhaber: KDK Automotive GmbH, 63607 Wächtersbach (DE)
(72) Erfinder: Schauerte, André, 57368 Lennestadt (DE)
(74) Vertreter: Köchling, Conrad-Joachim

(56) Entgegenhaltungen:
- EP-A1- 0 856 441
- EP-A1- 1 386 796
- EP-A1- 2 423 057

## Beschreibung

Die Erfindung betrifft eine Gurthöhenverstellvorrichtung für den Umlenkbeschlag eines Fahrzeugsicherheitsgurtes mit einer fahrzeugfesten Führungsschiene und einem in dieser verschieblich und arretierbar geführten und unverlierbar gehaltenen Verstellschlitten, an dem der Umlenkbeschlag anzuordnen ist, wobei die Führungsschiene in einem Boden Rastfenster aufweist, in die ein am Schlitten angeordneter Riegel arretierend eingreifen kann oder zum Verschieben des Schlittens außer Eingriff gebracht werden kann, wobei Betätigungsmittel zum Verstellen des Riegels aus der Arretierungslage in die Freigabelage vorgesehen sind und Federmittel, mittels derer der Riegel in die Arretierungslage gedrückt wird, wobei die Betätigungsmittel durch einen drehbar am Oberteil des Schlittens gehaltenen Betätigungshebel und einen von diesem betätigbaren, drehbar am Oberteil gelagerten Auslösehebel bestehen, und wobei der Auslösehebel mit dem Riegel zwangsgekoppelt ist und der Riegel im Schlitten ausschließlich linear, quer zur Schienenlängserstreckung verstellbar geführt ist.

Verstellvorrichtungen dieser Art sind im Stand der Technik vielfach bekannt.

Eine Gurthöhenverstellvorrichtung nach dem Oberbegriff von Anspruch 1 ist aus der EP 0 856 441 A1 bekannt.

Ausgehend von diesem Stand der Technik liegt der Erfindung die Aufgabe zugrunde, eine neue Lösung zu schaffen, die äußerst funktionstüchtig ist, eine sehr sichere Eingriffsmöglichkeit des Riegels in die Rastfenster der Führungsschiene ermöglicht und die zudem den Stand der Technik bereichert.

Zur Lösung dieser Aufgabe wird vorgeschlagen, dass der Auslösehebel gabelartig seitlich um den Riegel greift, wobei somit der Riegel formschlüssig umfasst ist und jeder Gabelschenkel ein Führungselement des Riegels aufnimmt.

Durch die Kombination von Betätigungshebel, Auslösehebel und Riegel wird insbesondere mit der ausschließlich linearen Verstellmöglichkeit des Riegels eine exakte Eingriffsmöglichkeit und eine exakte Entriegelung erreicht, wobei die konstruktive Lösung auch im Crashfall des damit ausgerüsteten Fahrzeuges zu ausgezeichneten Ergebnissen führt.

Dabei ist vorgesehen, dass der Auslösehebel gabelartig seitlich um den Riegel greift, wobei somit der Riegel formschlüssig umfasst ist und jeder Gabelschenkel ein Führungselement des Riegels aufnimmt.

Vorzugsweise ist zudem vorgesehen, dass der Auslösehebel mit jeweils einer weiteren Gabelung jedes Gabelschenkels das Führungselement des Riegels aufnimmt.

Des Weiteren ist bevorzugt vorgesehen, dass auf eine Achse des Auslösehebels eine Schenkelfeder mit ihren Windungen aufgesteckt ist, die sich mit ihren Enden am Oberteil des Schlittens und auf dem den Rastfenstern der Schiene abgewandten Ende des Riegels abstützt.

Um die Funktion zu verbessern und eine eindeutige Verstellmöglichkeit zu schaffen, ist vorgesehen, dass der Betätigungshebel an einem dem Auslösehebel zugewandten Bereich ein Gabellager bildet, indem Lagerzapfen des Auslösehebels geführt sind.

Um eine hochfunktionstüchtige aber kostengünstige Ausbildung zur Verfügung zu stellen, ist vorgesehen, dass der Riegel aus einem Kunststoffträgerelement besteht, das eingebettet oder aufgelegt zwei Metallriegelteile aufweist, wobei diese eine Aussparung am der Rastkante des Rastfensters der Schiene entgegengesetzten Schlittenteilen benachbarten Bereich und einen Hinterschnitt am der Rastkante zugewandten Bereich aufweisen.

Um die Sicherheit der Vorrichtung zu verbessern, ist zudem vorgesehen, dass die Metallriegelteile Anschlagbereiche oberhalb der Hinterschnitte aufweisen, die an Teilen des Schlittens abstützbar sind.

Zudem ist bevorzugt vorgesehen, dass das Führungselement des Riegels ein Führungszapfen ist.

Ein Ausführungsbeispiel der Erfindung ist in der Zeichnung dargestellt und im Folgenden näher beschrieben. Es zeigt:
- Figur 1: eine erfindungsgemäße Gurthöhenverstellvorrichtung von Vorn und von hinten gesehen;
- Figur 2: eine Draufsicht auf eine Gurthöhenverstellvorrichtung;
- Figur 3: ein Schnitt A-A gemäß Figur 2 bei unbetätigtem (verriegeltem) Gurthöhenversteller;
- Figur 4: desgleichen bei betätigtem Riegelelement;
- Figur 5: ein Schnitt E-E gemäß Figur 2 in unbetätigter Stellung;
- Figur 6: eine Ansicht im Schnitt B-B gemäß Figur 2 bei betätigtem Element;
- Figur 7: ein Schnitt D-D gemäß Figur 3 gesehen;
- Figur 8: einen Schnitt C-C gemäß Figur 3 gesehen;
- Figur 9: eine Einzelheit in unterschiedlicher Blickrichtung;
- Figur 10: eine weitere Einzelheit im Zusammenbau und in Einzeldarstellung;
- Figur 11: eine erfindungsgemäße Einzelheit in Ansicht.

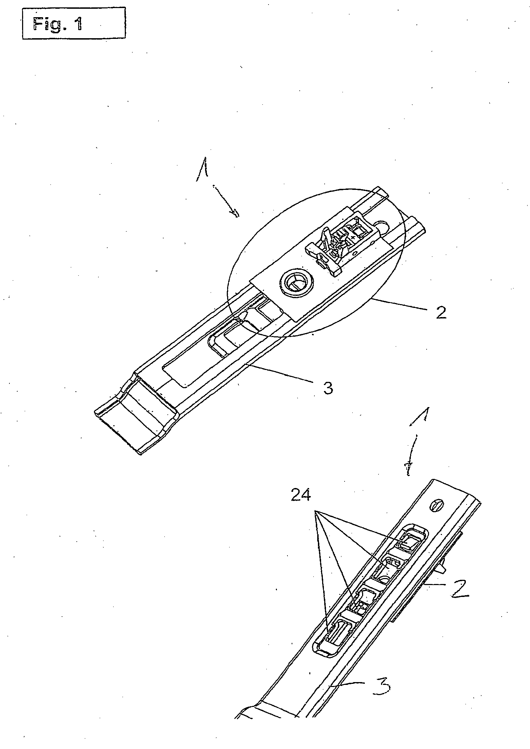

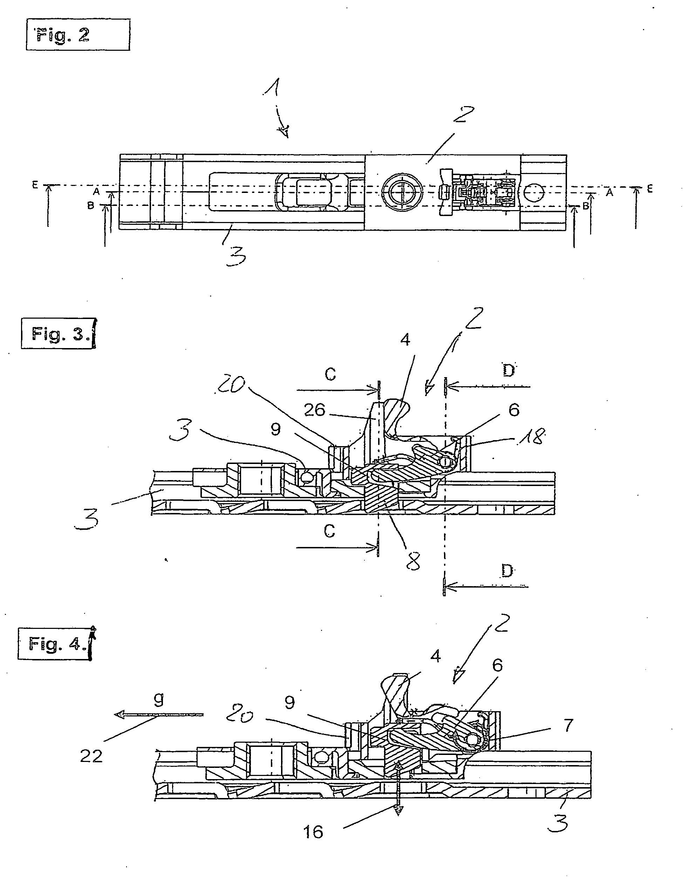

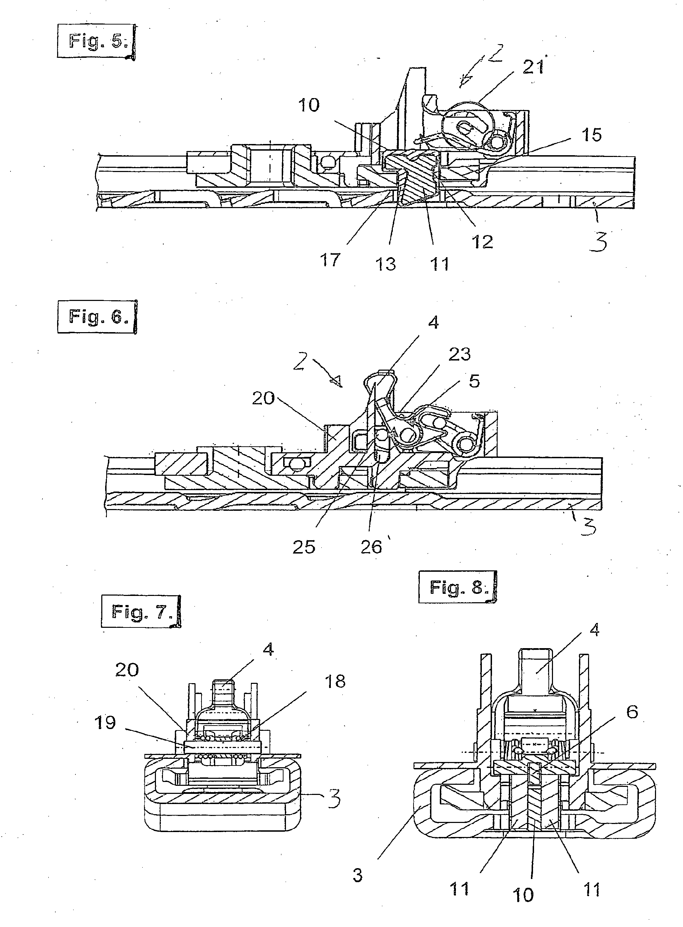

In Figur 1 ist eine Gurthöhenverstellvorrichtung 1 für den Umlenkbeschlag eines Fahrzeugsicherheitsgurtes gezeigt. Die Vorrichtung weist eine fahrzeugseitig befestigbare Führungsschiene 3 auf, in der ein Verstellschlitten 2 verschieblich und arretierbar geführt und unverlierbar gehalten ist. Die Führungsschiene ist beispielsweise im Querschnitt C-profilartig ausgebildet, wie insbesondere aus den Schnittbildern gemäß Figur 7 und Figur 8 ersichtlich ist. Im Boden der Schiene sind Rastfenster 24 ausgebildet, an denen ein entsprechender Riegel, der später noch beschrieben wird, rasten kann. Im Ausführungsbeispiel sind die Rastfenster in einem gegenüber dem Boden zurückgesetzten Bereich vorgesehen, wie insbesondere aus der Figur 8 ersichtlich ist, wobei die Rastfenster jeweils scharfkantige Ausnehmungen mit quer zur Schiene orthogonal gerichteten Rastkanten bilden, wie insbesondere aus beispielsweise Figur 3 und Figur 4 ersichtlich ist. Am Schlitten 2 ist ein entsprechender Riegel 8 verstellbar gehalten, der eine zur Rastkante des Fensters parallele Riegelfläche aufweist. Dieser Riegel 8 kann in eine Arretierposition überführt werden, in der er in Rastfenster 24 der Führungsschiene 3 eingreift oder auch in eine Entriegelungsposition, in der er außerhalb des Eingriffes der Rastfenster 24 ist. Zwischenpositionen können sich dadurch ergeben, dass der Benutzer den Riegel 8 entriegelt und den Schlitten 2 in eine Position führt, in der dem Riegel 8 kein Rastfenster 24 gegenüberliegt. Dies ist eine relativ gefährliche Position, insbesondere beim Auftreten eines Crash-Falles.

Der Riegel 8 ist mittels eines Betätigungsmittels verstellbar. Zusätzlich ist vorzugsweise vorgesehen, dass der Riegel 8 mittels eines Federmittels in Arretierlage gedrückt wird, so dass er bei der Entriegelung entgegen Federkraft verstellt werden muss.

Erfindungsgemäß sind die Betätigungsmittel durch einen drehbar am Oberteil 20 des Schlittens 2 gehaltenen Betätigungshebels 4 und einem von diesem betätigbaren drehbar am Oberteil 20 gelagerten Auslösehebel 6 gebildet, wobei der Auslösehebel 6 mit dem Riegel 8 zwangsgekoppelt ist, so dass der Riegel 8 durch Bewegung des Auslösehebels in die Freigabeposition oder die Verriegelungsposition verstellt werden kann. Der Riegel 8 ist, wie anschaulich in Figur 3 und 4 verdeutlicht, ausschließlich linear in Richtung 16 quer zur Schienenlängserstreckung verstellbar geführt. Das im Normalfall unten liegende Schienenende ist in den Zeichnungsfiguren 3 und 4 links vorhanden, während das obere Ende in den Zeichnungsfiguren rechts positioniert ist.

Der Riegel 8 weist an einem Endbereich eine Tasche 9 auf, in die ein Vorsprung des Auslösehebels 6 eingreift. Auf einer Achse 19 des Auslösehebels 6 ist eine Schenkelfeder 18 mit ihren Windungen aufgesteckt, die sich mit ihren Enden am Oberteil 20 des Schlittens 2 und auf dem den Rastfenstern 24 der Schiene 3 abgewandten Ende des Riegels 8 abstützt.

Der Betätigungshebel 4 bildet an einem dem Auslösehebel 6 zugewandten Bereich ein Gabellager (Bereich 21), in welchem Lagerzapfen des Auslösehebels 6 geführt sind, wie insbesondere aus den Figuren 5,6 und 9 ersichtlich ist.

Der Riegel 8 besteht aus einem Kunststoffträgerelement 10, das eingebettet oder aufgelegt zwei Metallriegelteile 11 hält, wobei diese jeweils eine Aussparung 12 an der Randkante des Rastfensters 24 entgegengesetzten Schlittenteilen benachbarten Bereich und einen Hinterschnitt 13 am der Rastkante eines Rastfensters 24 zugewandten Bereich aufweisen. Zusätzlich weisen die Metallriegelteile 11 Anschlagbereiche 14 oberhalb der Hinterschnitte 13 auf, die an Teilen des Schlittens 2 abstützbar sind.

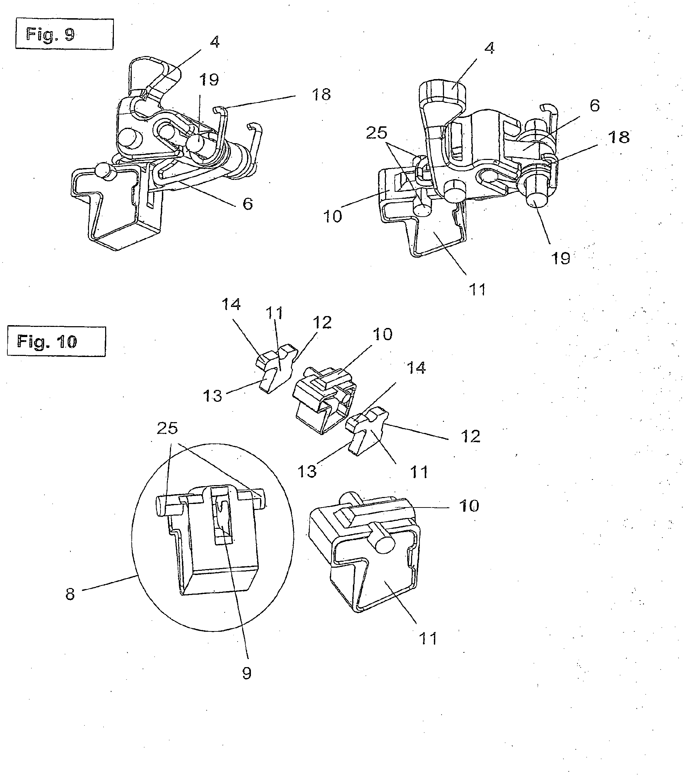

Die Ver- und Entriegelungseinheit (siehe Figur 9) der Gurthöhenverstellvorrichtung 1 sitzt im Verstellschlitten 2, welcher in der Führungsschiene 3 verschiebbar ist. Die Betätigung erfolgt über den Betätigungshebel 4, welcher über eine Rotationsbewegung 5 einen Auslösehebel 6 und dieser schließlich ebenfalls über eine Rotationsbewegung 7 den Riegel 8 ansteuert und bewegt.

Der Auslösehebel 6 greift in eine Tasche 9 des Kunststoffträgers 10 des Riegels 8 ein. Vorzugsweise besteht der Riegel 8 aus einem mittigen Kunststoffträgerelement 10 und zwei Metallriegelteilen 11, die jeweils seitlich in den Kunststoffträger 10 form- und kraftschlüssig montiert sind oder die auch beim Spritzgießprozess umspritzt sind.

Der Metallriegel 11 besitzt eine geometrische Aussparung 12 und einen Hinterschnitt 13 zum einen in Richtung des Verstellteils 15 und zum anderen zur Rastkante der Führungsschiene 17, um eine sichere Verriegelung zu gewährleisten, sowie eine Anschlaggeometrie 14, gegen das Herausziehen beziehungsweise Drehen des Riegels 8 aus dem Verstellteil 15.

Für eine komfortable Betätigung und eine geräuscharme Anordnung sind die Hinterschnitte 12,13 über den Kunststoffträger 10 mit Kunststoff gefüllt, so dass bei der rein linearen Entriegelungsrichtung 16 kein Verhaken der Geometrien auftreten kann. Bei einer Crashbelastung, beispielsweise in Richtung des Pfeiles 22, werden diese Kunststoffumhüllungen weggedrückt, so dass die eigentlichen Hinterschnitte 12, 13 am Metallriegel 11 für die sichere Verrastung mit der Rastkante eines Fensters greifen können.

Die Verriegelung erfolgt unter der Krafteinwirkung der Schenkelfeder 18, welche auf der Achse 19 mit dem Auslösehebel 6 im Schlittenoberteil 20 gelagert ist. Die Schenkelfeder 18 wirkt direkt auf den Riegel 8, so dass dieser zwischen Schenkelfeder 18 und Auslösehebel 6 eingespannt ist. Zur Unterstützung der Riegelführung besitzt der Kunststoffträger 10 ein Führungselement 25 (hier jeweils eine seitliche Achse), das in einer Führungsbahn 26 des Schlittenoberteils 20 mitläuft.

Um im Crashfall durch die hohen Beschleunigungskräfte ein Verriegeln der Gurthöhenverstellvorrichtung 1 aus einer Position des Riegels 8 zwischen zwei Rastfenstern 24 der Führungsschiene 3 zu unterstützen, sind der Betätigungshebel 4 und der Auslösehebel 6 an deren Kontaktstelle quasi über einen Formschluss 21, im Ausführungsbeispiel eine Gabelführung, miteinander zwangsgeführt. Durch die Beschleunigungskraft 22 des Gurtautomaten bei der Gurtstraffung wird der Verstellschlitten 2 in Einbaulage in Längsrichtung der Führungsschiene 3 nach unten beziehungsweise in den Zeichnungsfiguren nach links gezogen. Durch den Massenschwerpunkt 23 (siehe beispielsweise Figur 6) des Betätigungshebels 4 wird dieser durch seine Trägheit nach oben gedreht und will durch den Formschluss 21 der einzelnen Elemente (Gabelführung zum Auslösehebel 6 und den Sitz des Auslösehebels 6 wiederum in der Tasche 9 des Riegels 8) den Riegel 8 in das Rastfenster 24 der Führungsschiene 3 zurückdrücken. Unterstützt wird er zusätzlich von der Kraft der Schenkelfeder 18. Es wird somit eine hohe Funktionssicherheit und eine komfortable Verstellung ermöglicht.

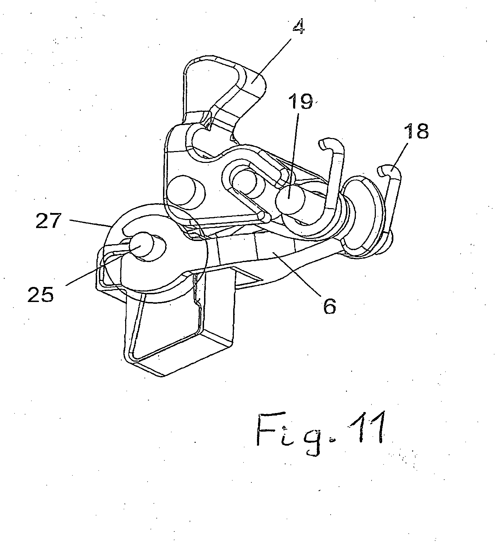

In Figur 11 ist eine erfindungsgemäße Einzelheit bei der der Auslösehebel 6 seitlich gabelartig um den Riegel 8 greift. Die so gebildeten Gabeln des Auslösehebels 6 wiederum gegabelt sein und nehmen dabei in ihrem Gabelspalt ein Führungselement 25 des Riegels 8, im Ausführungsbeispiel einen Führungszapfen auf.

Es wird hierdurch ein Formschluss 27 zwischen diesen Teilen erreicht.

Die Erfindung ist nicht auf die Ausführungsbeispiele beschränkt, sondern im Rahmen der Offenbarung vielfach variabel.

### Stückliste:

1 = ZSB GHV
2 = Verstellschlitten
3 = Führungsschiene
4 = Betätigungshebel
5 = Rotationsbewegung Betätigungshebel
6 = Auslösehebel
7 = Rotationsbewegung Auslösehebel
8 = ZSB Riegel
9 = Tasche Kunststoffträger
10 = Kunststoffträger
11 = 2x Metallriegel
12 = Aussparung Riegel
13 = Hinterschnitt Riegel
14 = Anschlaggeometrie Riegel
15 = Verstellteil
16 = lineare Entriegelungsrichtung ZSB Riegel
17 = Rastkante Führungsschiene
18 = Schenkelfeder
19 = Achse
20 = Schlittenoberteil
21 = Formschluss Betätigungshebel und Auslösehebel
22 = Beschleunigungskraft
23 = Massenschwerpunkt Betätigungshebel
24 = Rastfenster der Führungsschiene
25 = Führungselemente ZSB Riegel
26 = Führungsbahn im Schlittenoberteil für ZSB Riegel
27 = seitlicher Formschluss Auslösehebel zu ZSB Riegel

## Patentansprüche

1. Gurthöhenverstellvorrichtung für den Umlenkbeschlag eines Fahrzeugsicherheitsgurtes mit einer fahrzeugfesten Führungsschiene (3) und einem in dieser verschieblich und arretierbar geführten und unverlierbar gehaltenen Verstellschlitten (2), an dem der Umlenkbeschlag anzuordnen ist, wobei die Führungsschiene (3) in einem Boden Rastfenster (24) aufweist, in die ein am Schlitten (2) angeordneter Riegel (8) arretierend eingreifen kann oder zum Verschieben des Schlittens (2) außer Eingriff gebracht werden kann, wobei Betätigungsmittel zum Verstellen des Riegels (8) aus der Arretierungslage in die Freigabelage vorgesehen sind und Federmittel, mittels derer der Riegel (8) in die Arretierungslage gedrückt wird, wobei die Betätigungsmittel durch einen drehbar am Oberteil (20) des Schlittens (2) gehaltenen Betätigungshebel (4) und einen von diesem betätigbaren, drehbar am Oberteil (20) gelagerten Auslösehebel (6) bestehen, und wobei der Auslösehebel (6) mit dem Riegel (8) zwangsgekoppelt ist und der Riegel (8) im Schlitten (2) ausschließlich linear, quer zur Schienenlängserstreckung verstellbar geführt ist, **dadurch gekennzeichnet, dass** der Auslösehebel (6) gabelartig seitlich um den Riegel (8) greift, wobei somit der Riegel (8) formschlüssig umfasst ist und jeder Gabelschenkel ein Führungselement (25) des Riegels (8) aufnimmt.

2. Vorrichtung nach Anspruch 1, **dadurch gekennzeichnet, dass** der Auslösehebel (6) mit jeweils einer weiteren Gabelung jedes Gabelschenkels das Führungselement (25) des Riegels (8) aufnimmt.

3. Vorrichtung nach einem der Ansprüche 1 oder 2, **dadurch gekennzeichnet, dass** auf eine Achse (19) des Auslösehebels (6) eine Schenkelfeder (18) mit ihren Windungen aufgesteckt ist, die sich mit ihren Enden am Oberteil (20) des Schlittens (2) und auf dem den Rastfenstern (24) der Schiene (3) abgewandten Ende des Riegels (8) abstützt.

4. Vorrichtung nach einem der Ansprüche 1 bis 3, **dadurch gekennzeichnet, dass** der Betätigungshebel (4) an einem dem Auslösehebel (6) zugewandten Bereich ein Gabellager bildet, in dem Lagerzapfen des Auslösehebels (6) geführt sind.

5. Vorrichtung nach einem der Ansprüche 1 bis 4, **dadurch gekennzeichnet, dass** der Riegel (8) aus einem Kunststoffträgerelement (10) besteht, das eingebettet oder aufgelegt zwei Metallriegelteile (11) aufweist, wobei diese eine Aussparung (12) am der Rastkante des Rastfensters (24) der Schiene (3) entgegengesetzten Schlittenteilen benachbarten. Bereich und einen Hinterschnitt (13) am der Rastkante zugewandten Bereich aufweisen.

6. Vorrichtung nach Anspruch 5, **dadurch gekennzeichnet, dass** die Metallriegelteile (11) Anschlagbereiche (14) oberhalb der Hinterschnitte (13) aufweisen, die an Teilen des Schlittens (2) abstützbar sind.

7. Vorrichtung nach Anspruch 1, **dadurch gekennzeichnet, dass** das Führungselement (25) ein Führungszapfen ist.

## Claims

1. A safety belt height adjustment device for the redirecting fitting of a vehicle safety belt comprising a stationary guide rail (3) and a sliding plate (2) displaceably and lockably guided and captively held therein, at which the redirecting fitting is to be fitted, the guide rail (3) comprising latching windows (24) in a bottom, in which a bolt (8) arranged at the plate (2) can engage in a locking manner or can be brought out of engagement for displacing the plate (2), activating means for displacing the bolt (8) from the locking position into the release position and spring means being provided, by means of which the bolt (8) is pressed into the locking position, the activating means including an activating lever (4) rotatably held at the upper portion (20) of the plate (2) and a trigger lever (6) to be operated thereby and rotatably supported at the upper portion (20), and the trigger lever (6) being positively coupled to the bolt (8), and the bolt (8) being displaceably guided in the plate (2) in an exclusively linear manner transversely to the longitudinal extension of the rail, **characterized by** that the trigger lever (6) engages in a fork-type manner laterally around the bolt (8), thus the bolt (8) being embraced in a positive-locking manner, and each fork leg receives a guide element (25) of the bolt (8).

2. The device according to claim 1, **characterized by** that the trigger lever (6) receives, with another fork structure of each fork leg, the guide element (25) of the bolt (8).

3. The device according to one of claims 1 or 2, **characterized by** that on an axis (19) of the trigger lever (6), a leg spring (18) is fitted with its windings, said leg spring being supported with its ends at the upper portion (20) of the plate (2) and on the end of the bolt (8) opposite to the latching windows (24) of the rail (3).

4. The device according to one of claims 1 to 3, **characterized by** that the activating lever (4) forms, at a region facing the trigger lever (6), a fork bracket, in which journal pins of the trigger lever (6) are guided.

5. The device according to one of claims 1 to 4, **characterized by** that the bolt (8) is constituted of a plastic support element (10) that comprises in an embedded or laid-up manner two metal bolt parts (11) that include a recess (12) at the region adjacent to the plate portions opposite to latching edge of the latching window (24) of the rail (3) and an undercut (13) at the region facing the latching edge.

6. The device according to claim 5, **characterized by** that the metal bolt parts (11) include stop regions (14) above the undercuts (13) that can be supported on portions of the plate (2).

7. The device according to claim 1, **characterized by** that the guide element (25) is a guide pin.

## Revendications

1. Dispositif de réglage de la hauteur pour une armature de renvoi d'une ceinture de sécurité d'un véhicule comprenant un rail de guidage (3) stationnaire et une glissière (2) guidée de façon déplaçable et blocable et maintenue de façon imperdable là-dedans, à laquelle l'armature de renvoi est à disposer, le rail de guidage (3) comprenant des fenêtres d'encliquetage (24) dans un fond, dans lesquelles un verrou (8) disposé à la glissière (2) peut être engagé de façon bloquante ou peut être dégagé pour déplacer la glissière (2), des moyens d'actionnement pour déplacer le verrou (8) à partir de la position de blocage dans la position de relâchement et des moyens de ressort étant prévus, au moyen desquels le verrou (8) est poussé dans la position de blocage, les moyens d'actionnement comportant un levier d'actionnement (4) maintenu de façon rotative à la partie supérieure (20) de la glissière (2) et un levier de déclenchement (6) à être actionné par celui-ci et articulé à la partie supérieure (20), et le levier de déclenchement (6) étant couplé de façon positive au verrou (8), et le verrou (8) étant guidé de façon déplaçable dans la glissière (2) d'une façon exclusivement linéaire transversalement à l'étendue longitudinale du rail, **caractérisé en ce que** le levier de déclenchement (6) s'étend de façon de fourche latéralement autour le verrou (8), donc le verrou (8) étant entouré de façon solidaire, et chaque bras de fourche reçoit un élément de guidage élément (25) du verrou (8).

2. Dispositif selon la revendication 1, **caractérisé en ce que** le levier de déclenchement (6) reçoit, par une autre structure de fourche de chaque bras de fourche, l'élément de guidage (25) du verrou (8).

3. Dispositif selon une des revendications 1 ou 2, **caractérisé en ce que** sur un axe (19) du levier de déclenchement (6), un ressort à branches (18) est enfilé avec ses spires, ce ressort à branches étant en appui avec ses extrémités à la partie supérieure (20) de la glissière (2) et sur l'extrémité du verrou (8) opposée aux fenêtres d'encliquetage (24) du rail (3).

4. Dispositif selon une des revendications 1 à 3, **caractérisé en ce que** le levier d'actionnement (4) forme, à une région en face du levier de déclenchement (6), un palier de fourches, dans lequel des tourillons du levier de déclenchement (6) sont guidés.

5. Dispositif selon une des revendications 1 à 4, **caractérisé en ce que** le verrou (8) comporte un élément de support plastique (10), qui comporte deux parties de verrou métalliques (11) encastrées ou appliquées sur celui-ci qui comportent un évidement (12) à la région voisine à des parties de la glissière opposées à l'arête d'encliquetage de la fenêtre d'encliquetage (24) du rail (3) et une contre-dépouille (13) à la région en face de l'arête d'encliquetage.

6. Dispositif selon la revendication 5, **caractérisé en ce que** les parties de verrou métalliques (11) comportent des régions de butée (14) au-dessus des contre-dépouilles (13) qui sont en appui sur des parties de la glissière (2).

7. Dispositif selon la revendication 1, **caractérisé en ce que** l'élément de guidage (25) est un tourillon de guidage.
